# EUROPÄISCHE PATENTSCHRIFT

(11) **EP 1 952 035 B1**
(45) Veröffentlichungstag und Bekanntmachung des Hinweises auf die Patenterteilung: **16.12.2009**
(21) Anmeldenummer: 06805502.9
(22) Anmeldetag: 10.11.2006
(51) Int. Cl.: F16C 3/10, F16C 3/14

(54) **ZUSAMMENGESETZTE KURBELWELLE**
ASSEMBLED CRANKSHAFT
VILEBREQUIN ASSEMBLE

(30) Priorität: 23.11.2005 DE 102005056183
(43) Veröffentlichungstag der Anmeldung: 06.08.2008
(73) Patentinhaber: IAV GmbH Ingenieurgesellschaft Auto und Verkehr, 10587 Berlin (DE)
(72) Erfinder: BUDDE, Roger, 09117 Chemnitz (DE); SCHNEIDER, Erik, 09112 Chemnitz (DE)
(74) Vertreter: Buss, Fritz Gerd
(86) Internationale Anmeldenummer: PCT/DE2006/001968
(87) Internationale Veröffentlichungsnummer: WO 2007/059726

(56) Entgegenhaltungen:
- DE-A1- 10 258 759
- DE-C- 701 533
- FR-A- 1 048 907
- JP-A- 63 275 809
- US-A- 1 588 850

## Beschreibung

Die Erfindung betrifft eine zusammengesetzte Kurbelwelle mit den im Oberbegriff des Patentanspruches 1 genannten Merkmalen.

Allgemein vorbekannt ist es, Kurbelwellen aus mehreren Einzelteilen zusammenzusetzen. Die Kurbelwelle wird aus Kurbelwangen, Hauptlager- und Pleuellagerzapfen gebildet.

Aus der DE 195 36 349 C1 ist eine zusammengesetzte Kurbelwelle bekannt, deren Einzelteile jeweils aus einer Kurbelwange mit beiderseits angeformten, rohrförmigen Abschnitten besteht. Zum Aufbau der Kurbelwelle werden die rohrförmigen Abschnitte von mehreren Kurbelwangen durch Verschweißen miteinander verbunden. Dabei bilden die rohrförmigen, miteinander verbundenen Abschnitte einerseits den Hauptlager- und andererseits den Pleuellagerzapfen. Zur Schmierung der Lagerbereiche sind in den Kurbelwangen Ölführungen angeordnet.

Aus der DE 37 28 142 C2 ist ebenfalls eine zusammengesetzte Kurbelwelle bekannt, die aus einzelnen Kurbelwangen mit angeformten, konisch ausgebildeten Rohrstücken besteht. Die gegeneinander konisch ausgebildeten Verbindungsflächen der Rohrstücke werden durch Löten miteinander verbunden, wobei die einzelnen Rohrstücke ebenfalls den Hauptlager- und den Pleuellagerzapfen ergeben.

Aus der JP 63-275809 A ist eine zusammengesetzte Kurbelwelle bekannt, die aus beidseitig angeordneten Kurbelwangen mit dazwischen angeordneten, rohrförmig ausgebildeten Pleuellagerzapfen besteht. Zur Aufnahme der rohrförmig ausgebildeten Pleuellagerzapfen sind auf der Innenseite der Kurbelwangen Ringnuten angeordnet. Durch Nieten, die durch die beiden Kurbelwangen und durch den Pleuellagerzapfen geführt werden, werden die einzelnen Teile miteinander verbunden. Der Hauptlagerzapfen ist als Vollwelle ausgebildet, die in eine Aufnahmebohrung in der Kurbelwange eingesetzt wird. Die Befestigung des Hauptlagerzapfens erfolgt ebenfalls durch Vernietung. Dabei ist an der Stirnseite des Hauptlagerzapfens ein Nietbolzen angeordnet, der durch die Kurbelwange geführt und dort vernietet wird.

Die FR 1 048 907 A beschreibt eine aus mehreren Kurbelwangen, Haupt- und Pleuellagerzapfen zusammengesetzte Kurbelwelle, bei der die hohl ausgebildeten Haupt- und Pleuellagerzapfen jeweils über eine winkelförmige Anschlussbuchse mit den entsprechenden Kurbelwangen durch Löten miteinander verbunden werden. Die winkelförmigen Anschlussbuchsen werden direkt mit den Kurbelwangen verbunden, wobei zur Zentrierung der Anschlussbuchsen eine ringförmige Aussparung oder zwei Noppen vorgesehen sind. Zusätzlich erfolgt die Befestigung der hohl ausgebildeten Haupt- und Pleuellagerzapfen mit den jeweiligen Kurbelwangen durch Befestigungselemente in Form eines Hohlnietes. Dabei wird der entsprechende Hohlniet durch die hohl ausgebildeten Haupt- bzw. Pleuellagerzapfen und durch in den Kurbelwangen befindliche Öffnungen geführt.

Die DE 102 58 759 A1 beschreibt eine zusammengesetzte Kurbelwelle, bestehend aus Kurbelwangen und rohrförmig ausgebildeten Hauptlager- und Pleuellagerzapfen. Die Kurbelwangen sind mit Öffnungen zur Aufnahme der Hauptlager- und Pleuellagerzapfen versehen. Die Verbindung der Kurbelwange mit den Hauptlager- und Pleuellagerzapfen erfolgt durch Verschweißen.

Nachteilig bei dem aufgeführten Stand der Technik ist der verhältnismäßig hohe Aufwand, der zur Montage der Kurbelwelle benötigt wird.

Der Erfindung liegt die Aufgabe zugrunde, eine aus mehreren Einzelteilen zusammengesetzte Kurbelwelle zu schaffen, die einfach und schnell montierbar ist, sich durch eine Gewichtsreduzierung auszeichnet und mit der eine ausreichende Schmierung der Lagerbereiche erfolgen kann.

Diese Aufgabe wird erfindungsgemäß durch die kennzeichnenden Merkmale des Patentanspruches 1 gelöst.

Die zusammengesetzte Kurbelwelle besteht aus Kurbelwangen mit an deren Außenseite angeordneten Hauptlagerzapfen und an deren Innenseite angeordneten Pleuellagerzapfen, wobei der Hauptlager- und der Pleuellagerzapfen zueinander exzentrisch versetzt sind. Erfindungsgemäß sind die Kurbelwangen beidseitig mit einer Ringnut zur Aufnahme der rohrförmig ausgebildeten Hauptlager- und Pleuellagerzapfen ausgestattet. Außerdem sind die Kurbelwangen mit Öffnungen für eine Hülse versehen, die jeweils innerhalb der Hauptlager- und Pleuellagerzapfen angeordnet sind und form- und/oder kraftschlüssig mit den Kurbelwangen in Verbindung stehen.

Der Vorteil dieser erfindungsgemäßen Gestaltung und Anordnung besteht darin, dass die rohrförmigen Hauptlager- und Pleuellagerzapfen bei der Montage der Kurbelwelle leicht und exakt in den Ringnuten platziert und dort durch Löten, Kleben, Schweißen oder dergleichen bzw. durch Reibschluss mit Kurbelwange verbunden werden können. Außerdem ergibt sich durch die rohrförmig ausgebildeten Hauptlager- und Pleuellagerzapfen sowie durch die in den Kurbelwangen angeordneten Öffnungen eine gewichtsreduzierende Ausbildung der Kurbelwelle.

In vorteilhafter Weise sind die innerhalb der Hauptlager- und der Pleuellagerzapfen angeordneten und mit den Kurbelwangen in Verbindung stehenden Hülsen als Hohlschraube mit einem Differenzialgewinde ausgebildet, das in Wirkverbindung mit den beiden Kurbelwangen steht. Durch Einschrauben der mit Differenzialgewinde versehenen Hülsen in die Kurbelwangen der vormontierten Kurbelwelle wird erreicht, dass die beiden gegenüberliegenden Kurbelwangen eines Kurbelwellensegments gegeneinander verspannt werden und dadurch eine exakte Positionierung der zusammengesetzten Kurbelwelle bei der Montage erfolgt.

Durch die erfindungsgemäße Anordnung entsteht unter dem Hauptlager- und Pleuellagerzapfen jeweils ein Ringkanal, die über in der Kurbelwange angeordnete Ölkanäle miteinander verbunden sind. Die Ringkanäle sind über Bohrungen mit den in den Oberflächen der Hauptlager- und Pleuellagerzapfen angeordneten Ölaustrittsöffnungen verbunden, so dass beim Betrieb der Kurbelwelle die Lagerbereiche der Kurbel welle ausreichend mit Schmieröl versorgt werden können.

Weitere vorteilhafte Ausgestaltungen sind in den Unteransprüchen beschrieben, sie werden in der Beschreibung zusammen mit ihren Wirkungen erläutert.

Anhand von Zeichnungen wird die Erfindung nachfolgend an Ausführungsbeispielen näher beschrieben. In den dazugehörigen Zeichnungen zeigen:
- Fig. 1:: eine Schnittdarstellung eines Kurbelwellensegments der erfindungsge- mäßen Kurbelwelle,
- Fig. 2:: eine erfindungsgemäße Kurbelwange im Schnitt als Einzelheit und
- Fig. 3:: ein Kurbelwellensegment in perspektivischer Darstellung.

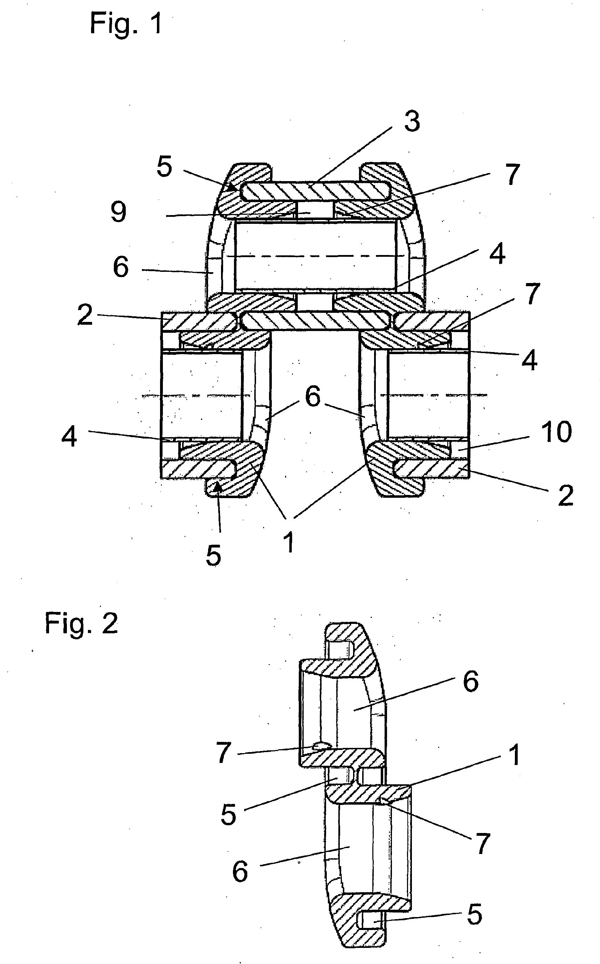

In Figur 1 ist ein Kurbelwellensegment einer sich aus mehreren Kurbelwellensegmenten aufbauenden Kurbelwelle dargestellt. Ein Kurbelwellensegment besteht aus dem zwischen zwei Kurbelwangen 1 angeordneten Pleuellagerzapfen 3 und dem an der gegenüberliegenden Seite der Kurbelwangen 1 und von dem Pleuellagerzapfen 3 beabstandet angeordneten Hauptlagerzapfen 2. Entsprechend dem Aufbau der Kurbelwelle sind die Hauptlagerzapfen 2 mit einer weiteren Kurbelwange 1 verbunden oder die Hauptlagerzapfen 2 sind als Endglieder ausgebildet.

Die Kurbelwangen 1, die ein Gussteil, ein Sinterteil oder ein Schmiedeteil sein können, sind zur Aufnahme des rohrförmig ausgebildeten Hauptlagerzapfens 2 und des Pleuellagerzapfens 3 beidseitig mit einer Ringnut 5 versehen. In Figur 2 ist die erfindungsgemäße Kurbelwange 1 als Einzelheit im Schnitt dargestellt. Die Kurbelwange 1 ist mit Öffnungen 6 für Hülsen 4 versehen, die innerhalb der Hauptlagerzapfen 2 und der Pleuellagerzapfen 3 angeordnet sind und form- und/oder kraftschlüssig mit den Kurbelwangen 1 in Verbindung stehen. Die Hülsen 4 sind vorzugsweise als Hohlschrauben mit einem Differenzialgewinde ausgebildet und stehen mit den beiden den Pleuellagerzapfen 3 begrenzenden Kurbelwangen 1 in Wirkverbindung. Dabei besitzt ein Teil der Hülse 4 einen geringeren Außendurchmesser mit einer geringen Gewindesteigung. Der andere Teil der Hülse 4 hat einen größeren Durchmesser mit einer größeren Gewindesteigung. Die Bohrungen der Öffnungen 6 der beiden Kurbelwangen 1 sind entsprechend mit unterschiedlichem Innengewinde zur Aufnahme der Hülse 4 ausgerüstet. Die Seite der Hülse 4 mit dem geringeren Außendurchmesser wird durch die größere Öffnung 6 der Kurbelwange 1 geführt. Danach greift das auf der Hülse 4 befindliche Gewinde mit dem geringeren Durchmesser in das entsprechende Innengewinde der gegenüberliegenden Kurbelwange 1 ein. Danach greift das Gewinde der Hülse 4 mit dem größeren Durchmesser in das Gewinde der anderen Kurbelwange 1 ein. Durch die unterschiedliche Steigung zieht die Hülse 4 die beiden Kurbelwangen 1 zueinander an, so dass die Hauptlagerzapfen 2 bzw. die Pleuellagerzapfen 3 in die entsprechende Ringnut 5 in den Kurbelwangen 1 gepresst werden. Zusätzlich werden die in die Ringnuten 5 eingesetzten, rohrförmigen Hauptlagerzapfen 2 und Pleuellagerzapfen 3 mit der Kurbelwange 1 verlötet, verklebt oder verschweißt.

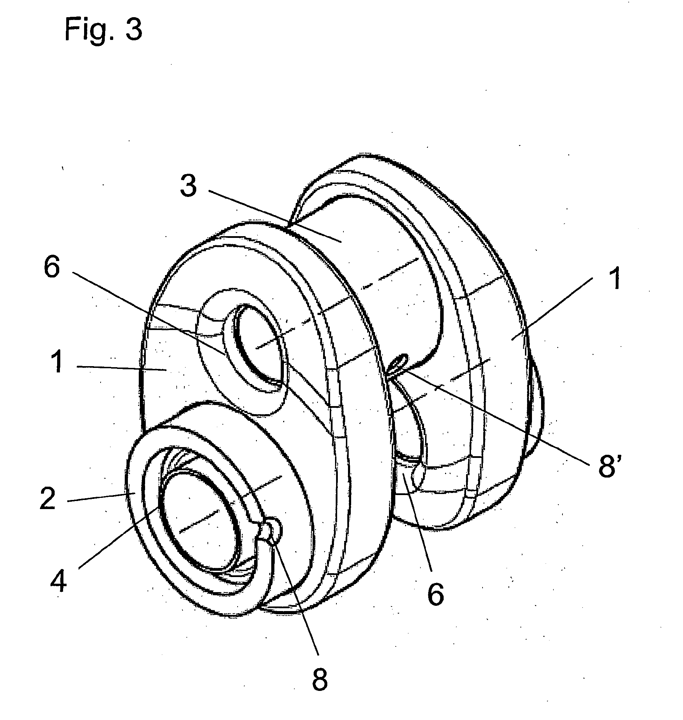

Es ist aber auch möglich, die Hülsen 4 mittels einer Presspassung in den Öffnungen 6 der Kurbelwangen 1 einzusetzen. Dabei können die Lagerzapfen 2 und 3 innen und/oder außen konisch ausgebildet sein und nach der Montage mit einer entsprechend ausgeführten Gegenfläche an der Kurbelwange 1 den Reibschluss herstellen. Die Hülsen 4 haben weiterhin die Aufgabe, in Verbindung mit den beiden Kurbelwangen 1 und einem Teil der Innenfläche des Hauptlagerzapfens 2 bzw. des Pleuellagerzapfens 3 einen Ringkanal 10 bzw. 9 zu bilden. In den Kurbelwangen 1 sind Ölkanäle 7 angeordnet, über die der Ringkanal 10 mit dem Ringkanal 9 in Verbindung steht. Über eine entsprechende Bohrung in dem Hauptlagerzapfen 2 und dem Pleuellagerzapfen 3 stehen die jeweiligen Ringkanäle 9 und 10 mit der Oberfläche der Pleuellagerzapfen 3 und der Hauptlagerzapfen 2 in Verbindung, so dass über die Kurbelwelle die Lagerflächen zur deren Schmierung mit Öl versorgt werden. In der perspektivischen Darstellung eines Kurbelwellensegments gemäß Figur 3 sind die Austrittsöffnungen 8 für das Öl an den Oberflächen der Hauptlagerzapfen 2 und der Pleuellagerzapfen 3 dargestellt.

### Aufstellung der verwendeten Bezugszeichen

- 1: Kurbelwange
- 2: Hauptlagerzapfen
- 3: Pleuellagerzapfen
- 4: Hülse
- 5: Ringnut
- 6: Öffnung
- 7: Ölkanal
- 8: Austrittsöffnungen
- 9: Ringkanal
- 10: Ringkanal

## Patentansprüche

1. Zusammengesetzte Kurbelwelle bestehend aus mehreren Kurbelwangen, die einerseits mit einem Hauptlagerzapfen und andererseits mit einem Pleuellagerzapfen verbindbar sind, wobei der Hauptlagerzapfen und der Pleuellagerzapfen gewichtserleichternde Hohlräume enthalten und die Kurbelwangen zum Verbinden mit dem Hauptlagerzapfen einerseits und mit dem Pleuellagerzapfen andererseits mit Öffnungen zur Durchführung eines Befestigungselements durch die hohl ausgebildeten Hauptlagerzapfen und Pleuellagerzapfen versehen sind,
**dadurch gekennzeichnet, dass**
die Kurbelwangen (1) zur Aufnahme der rohrförmig ausgebildeten Hauptlagerzapfen (2) und der Pleuellagerzapfen (3) beidseitig mit einer Ringnut (5) versehen sind und das Befestigungselement zur Befestigung der Hauptlagerzapfen (2) und der Pleuellagerzapfen (3) mit den jeweiligen Kurbelwangen (1) eine mit einem Differenzialgewinde versehene Hülse (4) ist, die form- und kraftschlüssig mit dem in den Öffnungen (6) der Kurbelwangen (1) angeordneten Innengewinde steht.

2. Kurbelwelle nach Anspruch 1,
**dadurch gekennzeichnet, dass**
die beidseitig angeordneten Ringnuten (5) zueinander versetzt angeordnet sind.

3. Kurbelwelle nach Anspruch 1 und 2,
**dadurch gekennzeichnet, dass**
die Hauptlagerzapfen (2) und die Pleuellagerzapfen (3) durch Löten, Kleben, Schweißen mit den Kurbelwangen (1) verbunden werden.

4. Kurbelwelle nach Anspruch 1 bis 3,
**dadurch gekennzeichnet, dass**
ein Ringkanal (9) durch einen Teil der Innenfläche des rohrförmigen Pleuellagerzapfens (3), einen Teil der Außenfläche der dazugehörigen Hülse (4) und seitlich durch die dazugehörigen Kurbelwangen (1) und der Ringkanal (10) durch einen Teil der Innenfläche des rohrförmigen Hauptlagerzapfens (2), einen Teil der Außenfläche der dazugehörigen Hülse (4) und seitlich durch die dazugehörigen Kurbelwangen (1) begrenzt wird.

5. Kurbelwelle nach Anspruch 1 bis 4,
**dadurch gekennzeichnet, dass**
in den Kurbelwangen (1) Ölkanäle (7) angeordnet sind, die über den Ringkanal (9) in Verbindung mit einer Austrittsöffnung (8) an den Oberflächen der Hauptlagerzapfen (2) und über einen Ringkanal (10) mit einer Austrittsöffnung (8) an den Oberflächen der Pleuellagerzapfen (3) stehen.

## Claims

1. Assembled crankshaft composed of multiple crank cheeks, which can be connected with a main bearing journal, on the one hand, and with a connecting rod bearing journal, on the other hand, whereby the main bearing journal and the connecting rod bearing journal contain cavities that reduce the weight, and the crank cheeks for connecting with the main bearing journal, on the one hand, and with the connecting rod bearing journal, on the other hand, are provided with openings for passing an attachment element through the main bearing journals and connecting rod bearing journals, which are configured to be hollow,
wherein
the crank cheeks (1) are provided, on both sides, with a ring groove (5) for accommodating the main bearing journals (2) and the connecting rod bearing journals (3), which are configured in tubular shape, and that the attachment element for attaching the main bearing journals (2) and the connecting rod bearing journals (3) with the crank cheeks (1), in each instance, is a sleeve (4) provided with a differential thread, that stands in connection with the inside thread disposed in the openings (6) of the crank cheeks (1), with a shape fit and with a force fit.

2. Crankshaft according to claim 1,
wherein
the ring grooves (5) disposed on both sides are disposed offset relative to one another.

3. Crankshaft according to claim 1 and 2,
wherein
the main bearing journals (2) and the connecting rod bearing journals (3) are connected with the crank cheeks (1) by means of soldering, gluing, welding.

4. Crankshaft according to claim 1 to 3,
wherein
the ring channel (9) is delimited by a part of the inside surface of the tubular connecting rod bearing journal (3), a part of the outside surface of the related sleeve (4), and laterally by the related crank cheeks (1), and the ring channel (10) is delimited by a part of the inside surface of the tubular main bearing journal (2), a part of the outside surface of the related sleeve (4), and laterally by the related crank cheeks (1).

5. Crankshaft according to claim 1 to 4,
wherein
oil channels (7) are disposed in the crank cheeks (1), which stand in connection with an exit opening (8) on the surfaces of the main bearing journals (2) by way of the ring channel (9), and with an exit opening (8) on the surfaces of the connecting rod bearing journals (3) by way of a ring channel (10).

## Revendications

1. Vilebrequin assemblé, constitué de plusieurs joues de vilebrequin, qui peuvent être connectées d'une part à un tourillon de palier principal et d'autre part à un tourillon de palier de bielle, le tourillon de palier principal et le tourillon de palier de bielle contenant des cavités réduisant le poids, et les joues de vilebrequin, pour la connexion au tourillon de palier principal d'une part et au tourillon de palier de bielle d'autre part, étant pourvues d'ouvertures pour le passage d'un élément de fixation à travers le tourillon de palier principal et le tourillon de palier de bielle réalisés sous forme creuse,
**caractérisé en ce que**
les joues de vilebrequin (1), pour recevoir le tourillon de palier principal (2) et le tourillon de palier de bielle (3) réalisés sous forme tubulaire, sont pourvues de chaque côté d'une rainure annulaire (5) et l'élément de fixation pour la fixation du tourillon de palier principal (2) et du tourillon de palier de bielle (3) aux joues de vilebrequin respectives (1) est une douille (4) pourvue d'un filetage différentiel, qui est en engagement par correspondance géométrique et par force avec le filetage interne disposé dans les ouvertures (6) des joues de vilebrequin (1).

2. Vilebrequin selon la revendication 1, **caractérisé en ce que** les rainures annulaires (5) disposées des deux côtés sont disposées de manière décalée l'une par rapport à l'autre.

3. Vilebrequin selon les revendications 1 et 2,
**caractérisé en ce que**
les tourillons de palier principaux (2) et les tourillons de palier de bielle (3) sont connectés aux joues de vilebrequin (1) par brasage, collage ou soudage.

4. Vilebrequin selon les revendications 1 à 3,
**caractérisé en ce**
**qu'**un canal annulaire (9) est limité par une partie de la surface intérieure du tourillon de palier de bielle tubulaire (3), une partie de la surface extérieure de la douille associée (4) et latéralement par les joues de vilebrequin associées (1) et le canal annulaire (10) est limité par une partie de la surface intérieure du tourillon de palier principal tubulaire (2), une partie de la surface extérieure de la douille associée (4) et latéralement par les joues de vilebrequin associées (1).

5. Vilebrequin selon les revendications 1 à 4,
**caractérisé en ce que**
des canaux d'huile (7) sont disposés dans les joues de vilebrequin (1), lesquels sont en liaison par le biais du canal annulaire (9) avec une ouverture de sortie (8) au niveau des surfaces des tourillons de palier principaux (2) et par le biais d'un canal annulaire (10) avec une ouverture de sortie (8) au niveau des surfaces des tourillons de palier de bielle (3).
